# EUROPÄISCHE PATENTANMELDUNG

(11) **EP 2 584 489 A1**
(43) Veröffentlichungstag der Anmeldung: **24.04.2013**
(21) Anmeldenummer: 12189272.3
(22) Anmeldetag: 19.10.2012
(51) Int. Cl.: G06F 21/70, G06F 21/57, G06F 21/86, G06F 9/44

(54) **Mobile Recheneinheit**

(30) Priorität: 19.10.2011 DE 102011116407
(71) Anmelder: embedded projects GmbH, 86152 Augsburg (DE)
(72) Erfinder: Sauter, Benedikt, 86152 Augsburg (DE)
(74) Vertreter: Epping - Hermann - Fischer

(57) **Zusammenfassung**

Eine mobile Recheneinheit (100) umfasst einen externen Schnittstellenanschluss (101) zum Anschließen einer Arbeitsstation (200) an die Recheneinheit (100), einen Multiplexer (30), der mit dem Schnittstellenanschluss (101) verbunden ist, einen Prozessor (10), der eingerichtet ist, ein Betriebssystem auszuführen, und einen Controller (20). Der Prozessor (10) und der Controller (20) sind jeweils über den Multiplexer (30) mit dem Schnittstellenanschluss (101) gekoppelt und miteinander über eine Datenverbindung verbunden. Der Controller (20) ist eingerichtet, den Multiplexer (30) derart anzusteuern, dass entweder der Prozessor (10) oder der Controller (20) mit dem Schnittstellenanschluss (101) verbunden ist, um jeweils mit einer angeschlossenen Arbeitsstation (200) zu kommunizieren. Der Prozessor (10) und der Controller (20) sind jeweils eingerichtet, den Schnittstellenanschluss (101) zu konfigurieren, wobei ein Umschalten der Verbindung des Multiplexers (30) zwischen dem Prozessor (10) und dem Controller (20) transparent für eine angeschlossene Arbeitsstation (200) erfolgt.

## Beschreibung

Die Erfindung betrifft eine mobile Recheneinheit, die insbesondere zum Anschluss an eine Arbeitsstation eingerichtet ist.

Es ist bekannt, externe Datenspeicher an Arbeitsstationen wie Personal Computer oder Notebooks anschließen zu können.

Die externen Datenspeicher beinhalten beispielsweise Halbleiterspeichermodule, Festplatten oder andere Massenspeichermedien. Üblicherweise liegen die Daten auf dem externen Datenspeicher in unverschlüsselter Form vor, so dass bei einem Verlust des Datenspeichers die Gefahr der unberechtigten Einsichtnahme in Daten besteht. Daher wird beispielsweise in der Arbeitsstation ein Verfahren vorgesehen, welches eine verschlüsselte Ablage der Daten auf dem Datenspeicher ermöglicht. Der Verschlüsselungsvorgang erfolgt dabei auf der Arbeitsstation. Dementsprechend kann ein Nutzer des Datenspeichers nicht sicher sein, dass die Daten nicht zusätzlich mit einem ihm unbekannten Schlüssel verschlüsselt werden, um einem Dritten unberechtigten Zugang zu den Daten zu gewähren.

Ein solcher externer Datenspeicher bietet zudem keine Möglichkeit, Prozesse in einer sicheren Umgebung auszuführen, da der Datenspeicher keinen dazu geeigneten Prozessor aufweist. Grundsätzlich wird die Möglichkeit der Ausführung von Prozessen in einer sicheren Umgebung durch einen tragbaren Computer wie ein Notebook erfüllt, wenn dieser tragbare Computer unter der vollständigen Kontrolle des Nutzers ist. Jedoch ist es üblicherweise nicht vorgesehen oder sogar durch spezielle Maßnahmen verhindert, dass ein tragbarer Computer in ein fremdes Netz eingebunden wird, um von einer Arbeitsstation auf diesen tragbaren Computer zuzugreifen.

Eine zu lösende Aufgabe besteht darin, ein verbessertes Konzept für ein mobiles Gerät anzugeben, welches flexibel einsetzbar ist.

Diese Aufgabe wird durch den Gegenstand des unabhängigen Patentanspruchs gelöst. Weiterbildungen und Ausgestaltungsformen sind in den abhängigen Ansprüchen gekennzeichnet.

Beispielsweise umfasst eine mobile Recheneinheit einen externen Schnittstellenanschluss zum Anschließen einer Arbeitsstation an die Recheneinheit, einen Multiplexer, der mit dem Schnittstellenanschluss verbunden ist, sowie einen Prozessor und einen Controller. Der Prozessor, der eingerichtet ist, ein Betriebssystem auszuführen, ist über den Multiplexer mit dem Schnittstellenanschluss gekoppelt. Der Controller ist über eine Datenverbindung mit dem Prozessor verbunden und über den Multiplexer ebenfalls mit dem Schnittstellenanschluss gekoppelt. Der Controller ist zudem eingerichtet, den Multiplexer derart anzusteuern, dass entweder der Prozessor oder der Controller mit dem Schnittstellenanschluss verbunden ist, um jeweils mit einer angeschlossenen Arbeitsstation zu kommunizieren. Der Schnittstellenanschluss umfasst beispielsweise eine Universal Serial Bus, USB-Schnittstelle.

Dementsprechend sind sowohl der Prozessor als auch der Controller in der Lage, über den Schnittstelleanschluss mit einer angeschlossenen Arbeitsstation Daten auszutauschen. Der Prozessor weist hierfür beispielsweise ein entsprechendes Betriebsprogramm oder Betriebssystem auf, welches unter anderem die Funktionalität für die Kommunikation über den Schnittstellenanschluss zur Verfügung stellt. Das Betriebssystem ist beispielsweise auf einem mit dem Prozessor verbundenen Massenspeicher abgelegt und wird bei der Inbetriebnahme der mobilen Recheneinheit gestartet. Die Initialisierung des Betriebssystems benötigt üblicherweise eine nicht vernachlässigbare Zeit. Der Controller ist beispielsweise als Mikroprozessor ausgeführt, welcher mit einem sofort verfügbaren Mikroprozessorprogramm betrieben wird. Dementsprechend steht die Funktionalität des Controllers nahezu unmittelbar nach dem Inbetriebsetzen der mobilen Recheneinheit zur Verfügung. Dadurch kann eine Ansteuerung des externen Schnittstellenanschluss durch den Controller in kurzer Zeit nach der Inbetriebnahme der Recheneinheit erfolgen.

Demzufolge ist es möglich, dass eine Ansteuerung des externen Schnittstellenanschlusses beziehungsweise eine Kommunikation darüber zunächst über den Controller erfolgt, welcher nach abgeschlossener Initialisierung des Prozessors den Multiplexer so umschaltet, dass der Prozessor über den Schnittstellenanschluss kommunizieren kann. Das Umschalten zwischen dem Controller und dem Prozessor erfolgt transparent für die angeschlossene Arbeitsstation, so dass keine Umkonfiguration des Schnittstellenanschlusses an der Arbeitsstation erforderlich ist.

Beispielsweise kann der Controller den Schnittstellenanschluss unmittelbar nach dem Einschalten der Recheneinheit als Schnittstelle zum Bereitstellen eines Massenspeichers konfigurieren, so dass eine an den Schnittstellenanschluss angeschlossene Arbeitsstation sich auf einen angeschlossenen Massenspeicher einstellen kann. Sobald das Betriebssystem des Prozessors initialisiert ist, und der Prozessor selbst eine Schnittstelle zum Bereitstellen eines Massenspeichers initialisiert hat, kann der Multiplexer vom Controller auf den Prozessor umgeschaltet werden. Somit kann beispielsweise eine Verschlüsselung von Daten mit einem Prozess durchgeführt werden, welcher auf dem Prozessor ausgeführt wird. Damit ist beispielsweise die Sicherheit und Flexibilität der Recheneinheit erhöht.

In verschiedenen Ausführungsformen sind jeweils der Prozessor und der Controller eingerichtet, den Schnittstellenanschluss als wenigstens eines der folgenden zu konfigurieren: Eine Netzwerkschnittstelle, eine Schnittstelle zum Bereitstellen eines Massenspeichers, eine Mensch-Maschine-Schnittstelle wie zum Beispiel eine Tastatur oder eine Computermaus, ein Schnittstellenverteiler. Dementsprechend kann sich die mobile Recheneinheit gegenüber der angeschlossenen Arbeitsstation nicht nur wie ein externer Massenspeicher verhalten, sondern auch wie eine Netzwerkschnittstelle, welche eine Kommunikation zwischen der Recheneinheit und der Arbeitsstation über ein Netzwerkprotokoll ermöglicht. Bei der Konfiguration als Mensch-Maschine-Schnittstelle, welche im Englischen auch als Human Interface Device, HID, bezeichnet wird, kann die mobile Recheneinheit beispielsweise als Tastatur oder Maus auftreten, um entsprechende Tastatureingaben oder Mausbewegungen zu simulieren. Bei der Konfiguration als Schnittstellenverteiler kann die Recheneinheit als sogenannte Hub arbeiten, an dem mehrere Geräte unterschiedlicher Klassen virtuell angeschlossen sind.

Der Controller legt beispielsweise durch die Kommunikation über die Datenverbindung mit dem Prozessor fest, als welcher Typ von Schnittstelle der Schnittstellenanschluss konfiguriert wird. Zudem können auch Daten über die Datenverbindung zwischen Prozessor und Controller ausgetauscht werden, die schließlich von einem von beiden über einen entsprechend konfigurierten Schnittstellenanschluss übertragen werden.

In verschiedenen Ausführungsformen ist der Controller eingerichtet, einen Bootvorgang zu steuern, der auf dem Prozessor abläuft. Beispielsweise gibt der Controller vor, welches von mehreren möglichen Betriebssystemen auf dem Prozessor gestartet wird. Zudem kann auch der Zeitpunkt des Beginns des Bootvorgangs vom Controller gesteuert werden.

In verschiedenen Ausgestaltungen umfasst die Recheneinheit ferner ein Authentifizierungsmodul, welches zur Authentifizierung eines Benutzers der Recheneinheit und zur Abgabe eines von der Authentifizierung abhängigen Authentifizierungssignals eingerichtet ist. Der Controller ist hierbei eingerichtet, den Bootvorgang auf der Basis des Authentifizierungssignals zu steuern. Beispielsweise ist es erforderlich, dass sich der Benutzer der Recheneinheit über das Authentifizierungsmodul, welches beispielsweise einen Fingerabdruckleser, einen Zifferblock zur Eingabe einer Identifikationsnummer, ein Mikrofon, eine Chipkarte oder ähnliches umfasst, authentifiziert. Der Controller steuert den Bootvorgang des Prozessors beispielsweise derart, dass der Bootvorgang erst nach erfolgreicher Authentifizierung gestartet wird. Ebenso ist es möglich, dass bei einem mehrstufigen Bootvorgang nur eine bestimmte Anzahl Stufen ohne Authentifizierung durchgeführt wird, während eine Fortsetzung des Bootvorgangs wiederum erst nach erfolgreicher Authentifizierung erfolgt.

Beispielsweise ist der Controller eingerichtet, auf der Basis des Authentifizierungssignals eine von wenigstens zwei gespeicherten Bootkonfigurationen auszuwählen, sodass der Prozessor mit der ausgewählten Bootkonfiguration bootet. Somit ist es möglich, dass für unterschiedliche Benutzer unterschiedliche Bootkonfigurationen auf der mobilen Recheneinheit vorgesehen werden, und jeweils diese Bootkonfiguration gestartet wird, welche dem jeweiligen Benutzer zugeordnet ist. Damit kann die Recheneinheit ohne weiteres von unterschiedlichen Benutzern verwendet werden, die dann jeweils keinen Zugriff auf die anderen Bootkonfigurationen haben. Beispielsweise sind die verschiedenen Bootkonfigurationen mit einem jeweils einem Benutzer zugeordneten Schlüssel verschlüsselt, so dass kein Zugriff auf die jeweils andere Bootkonfiguration möglich ist.

In einer Ausgestaltungsform ist der Controller eingerichtet, den Bootvorgang auf der Basis einer aktuellen Zeitinformation und wenigstens einem gespeicherten Zeitbereich zu steuern. Beispielsweise weist die Recheneinheit dazu ein Uhrzeitmodul auf, welches dem Controller eine aktuelle Uhrzeit liefert. Zudem hat der Controller einen oder mehrere Zeitbereiche gespeichert, während derer ein Booten zulässig ist beziehungsweise außerhalb derer ein Booten nicht möglich sein soll. Beim Start der Recheneinheit beziehungsweise unmittelbar vor dem Bootvorgang überprüft der Controller, ob der aktuelle Zeitpunkt für einen Bootvorgang zugelassen ist. Wenn der aktuelle Zeitpunkt in einem der gespeicherten Zeiträume liegt, steuert der Controller den Prozessor zum Booten an. Ansonsten wird das Booten des Prozessors durch den Controller verhindert.

In einer Ausgestaltungsform ist der Controller eingerichtet, den Prozessor in Abhängigkeit eines erfolgreichen Bootvorgangs des Prozessors über den Multiplexer mit dem Schnittstellenanschluss zu verbinden. Dementsprechend wird der Multiplexer erst dann auf dem Prozessor umgeschaltet, wenn der Bootvorgang des Prozessors beendet ist und insbesondere der Schnittstellenanschluss durch den Prozessor konfiguriert ist. In verschiedenen Ausführungsformen umfasst die Recheneinheit ferner wenigstens einen Sensor, welcher zur Erfassung wenigstens eines Betriebsparameters der Recheneinheit eingerichtet ist. Dabei ist der Controller eingerichtet einen Betriebszustand der Recheneinheit auf der Basis des wenigstens einen Betriebsparameters zu überwachen. Dies ermöglicht, einen sicheren Betrieb der Recheneinheit zu gewährleisten.

Beispielsweise ist der wenigstens eine Sensor aus der Gruppe der Folgenden gebildet: Ein Helligkeitssensor, ein Temperatursensor, ein Näherungssensor, ein Sensor zur Überwachung eines Gehäuses der Recheneinheit, ein Sensor zur Überwachung einer Spannungsversorgung der Recheneinheit. Dadurch ist es möglich, dass der Controller bei Unregelmäßigkeiten im Betrieb, beispielsweise einer zu hohen Temperatur der Recheneinheit, einer Öffnung des Gehäuses der Recheneinheit oder einer ausgefallenen Spannungsversorgung der Recheneinheit den Betrieb der Recheneinheit unterbindet oder zumindest eine Warnmeldung über den außergewöhnlichen Betriebszustand abgibt.

In verschiedenen Ausführungsformen umfasst die Recheneinheit ferner wenigstens ein Massenspeichermedium, insbesondere ein nichtflüchtiges Massenspeichermedium, wobei in wenigstens einem Speicherbereich des Massenspeichermediums eine Betriebssoftware für den Prozessor gespeichert ist oder speicherbar ist. Das Massenspeichermedium ist beispielsweise eine Speicherkarte mit Flash-Bausteinen, wie zum Beispiel eine SD-Karte oder eine Compact Flash-Karte. Das Massenspeichermedium kann aber auch durch eine Festplatte oder ein Festkörperlaufwerk, englisch Solid State Drive, SSD, gebildet sein.

In verschiedenen Ausgestaltungen ist der Prozessor eingerichtet, wenigstens einen weiteren Speicherbereich des Massenspeichermediums als Massenspeicher über den Schnittstellenanschluss zur Verfügung zu stellen. Dementsprechend weist das Massenspeichermedium mehrere Speicherbereiche auf, die zu unterschiedlichen Zwecken verwendet werden. Durch die Freigabe eines dieser Speicherbereiche als Massenspeichermedium für die angeschlossene Arbeitsstation kann die Recheneinheit als gesichertes Massenspeichermedium dienen. Das zur Verfügung stellen des Speicherbereichs für die Arbeitsstation kann jedoch nicht nur wie bei einem herkömmlichen externen Massenspeicher erfolgen, sondern beispielsweise auch als Netzlaufwerk, wenn beispielsweise der Schnittstellenanschluss als Netzwerkschnittstelle konfiguriert ist.

Beispielsweise ist der Prozessor zudem eingerichtet, Daten in den weiteren Speicherbereich des Massenspeichermediums verschlüsselt abzulegen. Die Verschlüsselung kann dabei insbesondere transparent für die Arbeitsstation durch den Prozessor erfolgen. Zudem ist es möglich, bei Nutzung durch unterschiedliche Benutzer und entsprechender Authentifizierung, einen jeweils für den Benutzer zugehörigen Speicherbereich freizugeben, während Speicherbereiche anderer Nutzer für die Arbeitsstation unsichtbar bleiben. In Kombination mit einer Verschlüsselung kann somit erreicht werden, dass die Recheneinheit zwischen verschiedenen Nutzern ausgetauscht werden kann, ohne dass diese Zugriff auf die Daten der jeweiligen anderen Nutzer haben. Dies geht insbesondere auch bei einem Öffnen der Recheneinheit und physikalischem Zugriff auf das Massenspeichermedium. Beispielsweise kann so auch bei einem Verlust der Recheneinheit ausgeschlossen werden, dass vertrauliche Daten, die verschlüsselt auf dem Massenspeichermedium gespeichert sind, in die Hände Unberechtigter gelangen.

In weiteren Ausgestaltungen ist der Prozessor eingerichtet, Programme auf dem weiteren Speicherbereich des Massenspeichermediums zur Verfügung zu stellen, die sich auf einer angeschlossenen Arbeitsstation ausführen lassen. Ein Nutzer kann demzufolge beispielsweise auf dem weiteren Speicherbereich Programme ablegen, welche dann mit gesicherter Herkunft von der Recheneinheit auf der Arbeitsstation ausgeführt werden. Beispielsweise sind die Programme derart gestaltet, dass sie auch auf verschiedene Funktionen der Recheneinheit zurückgreifen können. Ein Ausführen der Programme ohne Recheneinheit wäre demzufolge auch bei lokaler Speicherung auf der Arbeitsstation nicht möglich. Beispielsweise könnt das Programm einen Prozess auf dem Prozessor aufrufen, welcher in der gesicherten Umgebung des Prozessor abläuft und dadurch durch Manipulationen auf der Arbeitsstation geschützt ist.

In verschiedenen Ausführungsformen ist der Prozessor eingerichtet, eine virtuelle Maschine auszuführen, die von einer angeschlossenen Arbeitsstation kontaktierbar ist. In einer virtuellen Maschine lässt sich beispielsweise ein eigenes Betriebssystem ausführen, so dass die virtuelle Maschine als eigenständiger Computer in Erscheinung tritt. Das Betriebssystem, das auf der virtuellen Maschine ausgeführt wird, ist unabhängig von demjenigen der Arbeitsstation und auch von dem Betriebssystem, das auf dem Prozessor selbst ausgeführt wird. Dadurch lassen sich angepasste Programme in der virtuellen Maschine ausführen, welche beispielsweise speziell an die Anforderungen eines Nutzers angepasst sind. Eine Kommunikation zwischen der Arbeitsstation und der virtuellen Maschine erfolgt physikalisch über den Schnittstellenanschluss.

In weitere Ausführungsformen weist die Recheneinheit ferner einen weiteren Schnittstellenanschluss auf, der zum Anschließen eines Peripheriegeräts an die Recheneinheit eingerichtet ist, sowie einen weiteren Multiplexer, der mit dem weiteren Schnittstellenanschluss verbunden ist. Der weitere Multiplexer ist zudem mit dem Controller und dem Prozessor gekoppelt. Dabei ist der Controller eingerichtet, den weiteren Multiplexer derart anzusteuern, dass entweder der Prozessor oder der Controller mit dem weiteren Schnittstellenanschluss verbunden ist, um jeweils mit einem angeschlossenen Peripheriegerät zu kommunizieren. Das weitere Peripheriegerät ist beispielsweise ein Drucker, eine Datenkarte für mobilen Datenverkehr, beispielsweise über UMTS, ein RFID-Leser, eine an die Recheneinheit angeschlossenen Tastatur, ein Chipkartenleser oder weitere bekannte Peripheriegeräte. Dadurch ist es möglich, dass der Prozessor und der Controller jeweils auf das angeschlossene Peripheriegerät zugreifen können, ohne dass ein solcher Zugriff unmittelbar von der Arbeitsstation beeinflussbar wäre. Weiterhin ist es möglich, das angeschlossene Peripheriegerät über den Schnittstellenanschluss der Arbeitsstation zur Verfügung zu stellen, jeweils unter Kontrolle des Prozessors oder des Controllers.

Die Recheneinheit virtualisiert in verschiedenen Ausführungsformen durch den Prozessor einen Speicher, insbesondere einen Datenspeicher, und bietet zudem die Möglichkeit, Betriebssysteme, Anwendungen, Prozesse oder einen Ausführungsstrang, englisch thread, auf die Recheneinheit zu verschieben beziehungsweise zu migrieren oder auf der Recheneinheit zu starten, um in der Umgebung in der Recheneinheit abgesichert und gekapselt abzulaufen.

Vorzugsweise ist die Recheneinheit so ausgestaltet, dass bei einem Anschluss an eine Recheneinheit über den externen Schnittstellenanschluss diese ohne spezielle Treiber oder besondere Programme auf der Arbeitsstation möglich ist. Insbesondere ist die Recheneinheit vorzugsweise derart ausgestaltet, dass bei einem Betrieb an der Arbeitsstation, insbesondere als Massenspeicher für ein Betriebssystem keine Spuren auf der angeschlossenen Arbeitsstation hinterlassen werden und keine zusätzliche Administration notwendig ist. Vorzugsweise arbeitet die Recheneinheit dazu mit Standardtreibern, welche in herkömmlichen Betriebssystemen auf Arbeitsstationen oder auf Hardwareebene in der Arbeitsstation vorhanden sind. Beispielsweise erfolgt eine Authentifizierung für die Berechtigung der Nutzung der Recheneinheit ohne zusätzliche externe Baugruppen in der Recheneinheit selbst.

Beispielsweise ermöglicht die Recheneinheit in verschiedenen Ausführungsformen die Nutzung als verschlüsseltes virtualisiertes Datenlaufwerk, welches nach Authentifizierung an der Recheneinheit wie ein herkömmlicher externer Massenspeicher freigegeben wird. Damit wird es auch möglich, ein ganzes Betriebssystem zum Booten der Arbeitsstation auf dem virtualisierten Datenlaufwerk zu speichern, so dass die Arbeitsstation nur als Rechenkern mit Arbeitsspeicher und Ein- und Ausgabeeinheiten verwendet wird. Insbesondere wird in einer solchen Betriebsart kein Betriebssystem oder ein Festspeicher der Arbeitsstation benutzt, so dass keine Spuren in einem bestehenden System hinterlassen werden.

Eine Steuerung der Recheneinheit erfolgt vorzugsweise durch den Controller, welcher Sitzungen verwaltet, eine Log-Datei führt oder auch ein zeitliches Rechensystem verwaltet. Zudem kann der Controller Funktionen zur Überwachung einer Platine der Recheneinheit übernehmen.

Die Erfindung wird nachfolgend an mehreren Ausführungsbeispielen anhand von Figuren näher erläutert. Gleiche Bezugszeichen kennzeichnen hierbei Elemente oder Bauteile gleicher Funktion. Soweit sich Schaltungsteile oder Bauelemente in ihrer Funktion entsprechen, wird deren Beschreibung nicht in jeder der folgenden Figuren wiederholt.

Es zeigen:
- Figur 1: ein Blockschaltbild einer Ausführungsform einer mobilen Recheneinheit,
- Figur 2: ein Blockschaltbild einer weiteren Ausführungsform einer mobilen Recheneinheit,
- Figur 3: ein Blockschaltbild einer weiteren Ausführungsform einer mobilen Recheneinheit,
- Figur 4: ein Blockschaltbild eines Details einer Ausführungsform einer mobilen Recheneinheit,
- Figur 5: ein Blockschaltbild einer Ausführungsform eines Massenspeichermediums,
- Figur 6: eine beispielhafte Anschlusskonfiguration einer mobilen Recheneinheit mit einer Arbeitsstation, und
- Figur 7: ein Blockschaltbild eines weiteren Details einer Ausführungsform einer mobilen Recheneinheit.

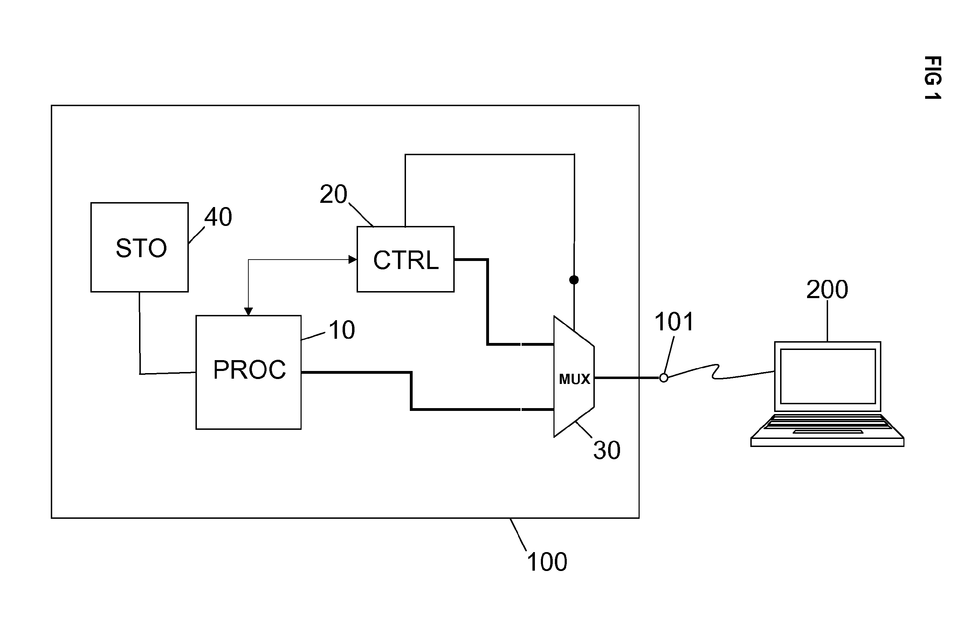

Figur 1 zeigt ein Blockschaltbild einer Ausführungsform einer mobilen Recheneinheit 100, welche einen Prozessor 10, einen Controller 20, einen Multiplexer 30 sowie ein Massenspeichermedium 40 umfasst. Ein erster Eingang des Multiplexers 30 ist mit dem Prozessor 10 gekoppelt, während ein zweiter Eingang mit dem Controller 20 gekoppelt ist. Ein Ausgang des Multiplexers 30 ist mit einem Schnittstellenanschluss 101 verbunden, über den die mobile Recheneinheit 100 mit einer externen Arbeitsstation 200 verbunden werden kann. Ein Steuereingang des Multiplexers 30 ist mit dem Controller 20 verbunden. Der Prozessor 10 ist mit dem Controller 20 zudem über eine Datenverbindung verbunden. Das Massenspeichermedium 40 ist an dem Prozessor 10 angeschlossen.

Im Betrieb der mobilen Recheneinheit 100 ist entweder der Prozessor 10 oder der Controller 20 mit dem Schnittstellenanschluss 101 verbunden, wobei die Verbindung durch den Controller 20 gesteuert ist. Der Prozessor 10 und der Controller 20 sind insbesondere jeweils eingerichtet, den Schnittstellenanschluss 101 für verschiedene Geräteklassen zu konfigurieren. Beispielsweise umfasst der Schnittstellenanschluss 101 eine Universal Serial Bus-, USB-, Schnittstelle, sodass eine Kommunikation zwischen dem Prozessor 10 beziehungsweise dem Controller 20 und der angeschlossenen Arbeitsstation 200 gemäß den USB Spezifikationen erfolgt. Beispielsweise kann der Schnittstellenanschluss 101 vom Prozessor 10 und vom Controller 20 als Netzwerkschnittstelle, als Schnittstelle zum Bereitstellen eines Massenspeichers, als Mensch-Maschine-Schnittstelle, englisch Human Interface Device, HID, oder als Schnittstellenverteiler, englisch HUB, konfiguriert werden. Dementsprechend erscheint die Recheneinheit 100 der Arbeitsstation 200 als entsprechend konfiguriertes Medium. Insbesondere ist die Recheneinheit 100 dabei eingerichtet, die Konfiguration auch im Betrieb zu ändern und somit beispielsweise von einem Massenspeicher zu einer Netzwerkschnittstelle zu wechseln. Mit anderen Worten wird von der Recheneinheit 100 eine beliebige Schnittstellenart am Schnittstellenanschluss 101 emuliert. Beispielsweise weisen der Prozessor 10 und der Controller 20 jeweils einen Schnittstellen-Stapel, engl. stack auf.

Die Datenverbindung zwischen dem Prozessor 10 und dem Controller 20 dient beispielsweise der internen Kommunikation. Dazu ist etwa ein gesicherter Tunnel zwischen dem Prozessor 10 und dem Controller 20 aufgebaut bzw. vorgesehen. Vorzugsweise sind der Prozessor 10 und der Controller 20 in ständiger Kommunikation über die Datenverbindung. Für den sicheren Tunnel bzw. eine verschlüsselte Kommunikation über die Datenverbindung sind der Prozessor 10 und der Controller 20 beispielsweise eingerichtet, ein Schlüsselpaar, insbesondere ein symmetrisches Schlüsselpaar, dynamisch zu erzeugen. Dieses wird dann lediglich in internen Speicherbereichen abgelegt und kann nicht von außerhalb der Recheneinheit 100 ausgelesen werden.

Beispielsweise ist auf dem Massenspeichermedium 40 eine Einteilung in mehrere Speicherbereiche vorgenommen, wobei in einem oder mehreren dieser Speicherbereiche ein Betriebssystem für den Prozessor 10 gespeichert ist. Der Prozessor 10 ist beispielsweise ein herkömmlicher Kleinprozessor, der beispielsweise mit 400 MHz getaktet wird. Der Controller 20 ist beispielsweise als Mikroprozessor oder Mikrocontroller ausgeführt, welcher durch entsprechenden Mikrocontrollercode betrieben wird. Dadurch kann der Controller 20 beispielsweise den Schnittstellenanschluss 101 schneller konfigurieren als der Prozessor 10. Somit wird eine schnelle Betriebsbereitschaft der Recheneinheit 100 erreicht.

Der Controller 20 ist beispielsweise eingerichtet, einen Bootvorgang eines auf dem Massenspeichermedium 40 gespeicherten Betriebssystems zu steuern, der auf dem Prozessor 10 abläuft. Beispielsweise wird während des Bootvorgangs des Prozessors 10 der Multiplexer 30 so eingestellt, dass der Controller 20 mit dem Schnittstellenanschluss 101 verbunden ist, wobei der Controller 20 nach erfolgreich abgeschlossenem Bootvorgang den Multiplexer 30 umschaltet, sodass ab diesem Zeitpunkt der Prozessor 10 mit dem Schnittstellenanschluss 101 verbunden ist.

Durch den Controller 20 ist es möglich, dass die Recheneinheit 100 nahezu unmittelbar nach ihrer Inbetriebnahme oder Aktivierung als funktionsfähiges Gerät am Schnittstellenanschluss 101 zur Verfügung steht. Dadurch kann unmittelbar eine Kommunikation mit einer angeschlossenen Arbeitsstation 200 erfolgen. Weitere Funktionen, die von einer erfolgreichen Initialisierung des Prozessors 10 abhängen, können nach erfolgreichem Bootvorgang bereitgestellt werden. Somit zeichnet sich die Recheneinheit 100 durch erhöhte Flexibilität aus. Zudem kann durch die Steuerung des Bootvorgangs durch den Controller 10 die Sicherheit der Recheneinheit 100 erhöht werden.

Die Recheneinheit 100 ist vorzugsweise in einem Gehäuse angeordnet, welches die Komponenten der Recheneinheit 100 vor äußeren Einflüssen und insbesondere vor unberechtigtem Zugriff schützt. Weitere Komponenten, wie beispielsweise eine Spannungsversorgung, die in die Recheneinheit 100 integriert sind, sind aus Übersichtsgründen nicht dargestellt.

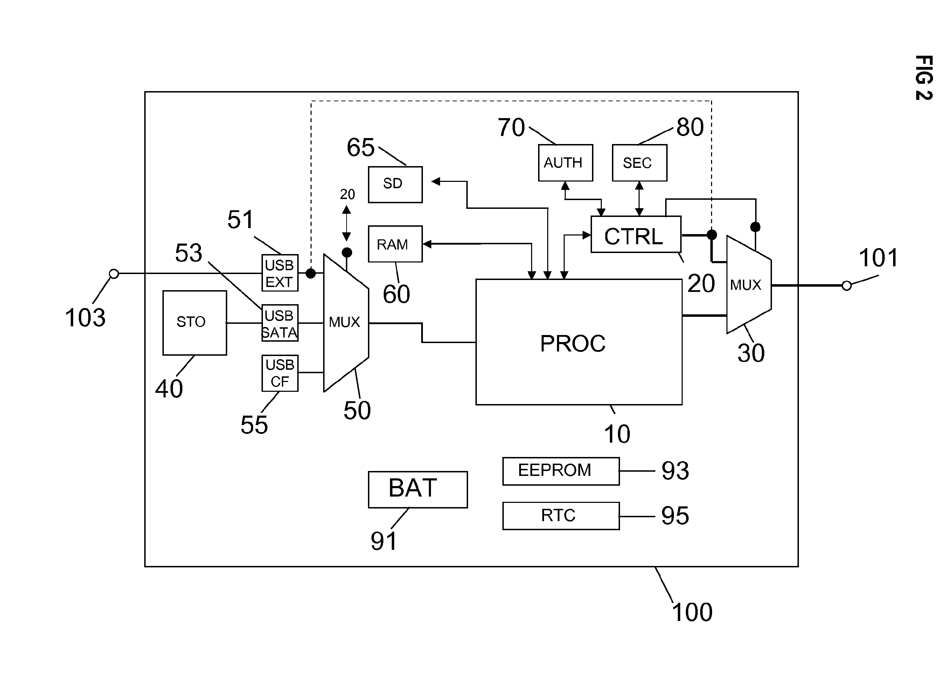

Figur 2 zeigt eine Weiterbildung der in Figur 1 dargstellten Ausführungsform einer Recheneinheit 100. Zusätzlich zu den in Figur 1 dargestellten Baugruppen weist die Recheneinheit 100 in diesem Ausführungsbeispiel einen weiteren Multiplexer 50 auf, der ausgangsseitig mit dem Prozessor 10 verbunden ist und drei Eingänge aufweist. Die Verbindung des Prozessors 10 zu dem Multiplexer 50 stellt eine Schnittstellenverbindung dar, welche beispielsweise den Anschluss verschiedener USB-fähiger Geräte an dem Prozessor ermöglicht. Beispielsweise ist an einem ersten Eingang des Multiplexers 50 ein Anschlusselement 51 zum Anschließen eines externen USB-Geräts vorgesehen, das mit einem weiteren externen Schnittstellenanschluss 103 verbunden ist. An den Schnittstellenanschluss 103 können beispielsweise ein USB-fähiger Drucker, eine USB-Tastatur, eine USB-Maus, ein RFID-Leser, ein Chipkartenleser, ein Modem, insbesondere für mobile Datenübertragung über ein Mobilfunknetz, eine USB-Netzwerkkarte oder ähnliches angeschlossen werden, welche bei entsprechender Einstellung des Multiplexers 50 mit dem Prozessor 10 kommunizieren können.

An einem zweiten Eingang des Multiplexers 50 ist ein weiteres Anschlusselement 53 vorgesehen, welches zum Anschluss eines USB-fähigen Massenspeichermediums 40 eingerichtet ist. Beispielsweise stellt das zweite Anschlusselement 53 eine USB nach Serial Advanced Technology Attachment-, SATA-Festplattenschnittstelle dar, welche ein mit einer SATA-Schnittstelle ausgestattetes Massenspeichermedium für einen Betrieb nach der USB-Spezifikation befähigt. Das Massenspeichermedium 40 ist beispielsweise ein Festkörperlaufwerk, englisch Solid State Drive, SSD, kann aber auch durch herkömmliche Festplatten oder andere Speichermedien gebildet sein.

An einem dritten Eingang des Multiplexers 50 ist beispielsweise ein drittes Anschlusselement 55 vorgesehen, welches den Anschluss einer Compact-Flash-Speicherkarte an die USB-Schnittstelle des Prozessors 10 ermöglicht.

Die Zahl von drei Eingängen des Multiplexers 50 ist lediglich beispielhaft gewählt. Insbesondere kann auch eine geringere oder eine höhere Anzahl von Eingängen vorgesehen werden, um weniger oder mehr Geräte an den Prozessor 10 anschließen zu können.

Der Multiplexer 50 weist einen Steuereingang auf, der mit dem Controller 20 verbunden ist, um die Verbindung eines der Eingänge mit dem Prozessor 10 zu steuern.

Der erste Eingang des Multiplexers 50, der mit dem weiteren externen Schnittstellenanschluss 103 gekoppelt ist, ist mit dem Schnittstelleneingang des Controllers 20 verbunden, welcher an den Eingang des Multiplexers 30 angeschlossen ist. Dadurch ist es möglich, ein externes USB-Gerät am Schnittstellenanschluss 103 durch den Controller 20 zu betreiben. Dazu ist der Controller 20 beispielsweise als so genanntes USB on the go-Gerät betreibbar, welches sowohl in der Lage ist, in einer ersten Betriebsart selbst als anzuschließendes Gerät als auch in einer zweiten Betriebsart als Host für ein anzuschließendes Gerät zu arbeiten. Auch der Prozessor 10 kann als so genanntes USB on the go-Gerät betrieben werden.

Die Recheneinheit 100 umfasst in diesem Ausführungsbeispiel ferner einen flüchtigen Speicher 60 und ein weiteres Massenspeichermedium 65, welches beispielsweise als Secure Digital Memory Card, kurz SD-Speicherkarte ausgeführt ist. Der flüchtige Speicher 60 und das weitere Massenspeichermedium 65 sind an dem Prozessor 10 angeschlossen.

Weiterhin sind in der Recheneinheit 100 ein Authentifizierungsmodul 70 und ein Sicherheitsmodul 80 vorgesehen, die an den Controller 20 angeschlossen sind. Weiterhin umfasst die Recheneinheit 100 eine Batterie 91, einen nichtflüchtigen Speicher 93, der beispielsweise als programmierbarer Halbleiterbaustein, insbesondere als EEPROM ausgeführt ist, und ein Uhrzeitmodul 95, welches eine so genannte Echtzeituhr, englisch Realtime Clock, RTC, für die Recheneinheit 100 zur Verfügung stellt.

Beispielsweise ist in dem nichtflüchtigen Speicher 93 ein Mikroprozessorprogramm für den Controller 20 gespeichert. Zusätzlich können in dem Speicher 93 auch Konfigurationsdaten für die Recheneinheit 100 oder ähnliches abgelegt sein.

Wie zuvor angegeben, steuert der Controller 20 beispielsweise einen Bootvorgang des Prozessors 10. Dazu kann der Controller 20 einen Anmeldevorgang über das Authentifizierungsmodul 70 überwachen. Das Authentifizierungsmodul 70 umfasst beispielsweise einen Fingerabdruckscanner, ein Zahlenfeld, Mittel zur Spracherkennung, beispielsweise mit einem Mikrofon, eine externe Tastatur zur Eingabe eines Passworts, einen Bewegungssensor zur Erfassung eines Bewegungsmusters oder einen anderen Authentifizierungssensor, der die Authentifizierung eines Benutzers an der Recheneinheit 100 ermöglicht. Zudem können auch mehrere verschiedene Authentifizierungsmittel vorgesehen werden, sodass eine Authentifizierung durch eine Kombination verschiedener Authentifizierungsverfahren erfolgt.

Das Authentifizierungsmodul 70 gibt hierzu beispielsweise ein Authentifizierungssignal ab, welches insbesondere das Ergebnis eines Authentifizierungsvorgangs umfasst. Zudem kann in dem Authentifizierungssignal auch eine Information über den jeweils authentifizierten Benutzer enthalten sein. Die Authentifizierung kann auch zeitabhängig gesteuert werden, beispielsweise auf Basis eines Zeitsignals, welches von dem Uhrzeitmodul 95 bereitgestellt wird. Beispielsweise ist ein Betrieb für einzelne oder alle Benutzer der Recheneinheit 100 nur in bestimmten Zeiträumen möglich beziehungsweise in bestimmten Zeiträumen ausgeschlossen. Dementsprechend kann die im Authentifizierungssignal enthaltene Information mit den Zeitinformationen verknüpft werden, um basierend darauf den Bootvorgang des Prozessors 10 zu steuern.

Authentifizierunginformationen, beispielsweise eine Liste möglicher Benutzer und deren Anmeldedaten, können etwa auf dem Massenspeichermedium 65 gespeichert sein. Vorzugsweise ist das Massenspeichermedium 65 in einfacher Weise austauschbar bzw. auswechselbar, beispielsweise als Speicherkarte. Die Authentifizierunginformationen können aber auch auf einem zusätzlichen Speichermedium gespeichert sein, welches beispielsweise getrennt von der Recheneinheit 100 gelagert werden kann und nur beim Betrieb der Recheneinheit 100 bzw. des Prozessor 10 mit der Recheneinheit 100 verbunden wird.

Weiterhin kann über das Sicherheitsmodul 80 ein Betriebszustand der Recheneinheit 100 erfasst werden, beispielsweise durch verschiedene Sensoren, welche Betriebsparameter der Recheneinheit 100 überwachen. Beispielsweise wird eine Spannungsversorgung der Recheneinheit 100 über die Batterie 91 überwacht. Die Überwachung erfolgt vorzugsweise kontinuierlich, sodass beispielsweise zu jedem Zeitpunkt eine Spannungsunterbrechung detektiert und aufgezeichnet werden kann. Hierbei kann beispielsweise auch festgestellt werden, ob die Spannungsversorgung wegen einer Entladung der Batterie 91 unterbrochen wurde oder willkürlich, etwa durch Entfernen der Batterie 91. Dementsprechend kann auf eine unterbrochene Spannungsversorgung in verschiedenen Weisen reagiert werden. Beispielsweise ist es möglich, einen Bootvorgang lediglich für eine bestimmte Nutzergruppe, etwa Administratoren, zu erlauben und für die übrigen Benutzer zu sperren, da das System bei unterbrochener Spannungsversorgung 91 komprimiert worden sein könnte. Es ist jedoch auch möglich, lediglich einen Warnhinweis an dem Benutzer der Recheneinheit 100 abzugeben, beispielsweise optisch oder akustisch, um ihn die unterbrochene Spannungsversorgung zu signalisieren.

Ähnliche Maßnahmen können auch bei der Auswertung anderer Betriebsparameter ergriffen werden. Der Controller 20 kann auch eine Log-Datei oder Protokoll-Datei führen, in der Ereignisse innerhalb der Recheneinheit 100 protokolliert werden. Eine solche Datei kann auf einem der Massenspeichermedien 40, 65 oder in dem Speicher 93 abgelegt werden.

In Abhängigkeit der verschiedenen Informationen, insbesondere des Authentifizierungssignals und möglicher Betriebsparameter kann der Bootvorgang entsprechend gesteuert werden. Beispielsweise wird der Bootvorgang des Prozessors 10 erst eingeleitet, wenn eine erfolgreiche Authentisierung vorliegt und weitere Bedingungen erfüllt sind. Bis dahin kann der Bootvorgang vollständig blockiert oder auch teilweise blockiert werden. Beispielsweise wird in einer Konfiguration ein Bootvorgang bis zu einem bestimmten Systemzustand durchgeführt und dann angehalten, bis die oben genannten Bedingungen erfüllt sind. In verschiedenen Ausführungsformen und Konfigurationen ist es beispielsweise auch vorgesehen, den Bootvorgang des Betriebssystems für den Prozessor 10 vollständig durchzuführen und die Authentifizierungsdaten dem initialisierten Betriebssystem zur Verfügung zu stellen.

Beispielsweise sind verschiedene Bootkonfigurationen vorgesehen, welche in Abhängigkeit der Authentifizierung oder anderer Parameter ausgewählt werden. Die verschiedenen Bootkonfigurationen können beispielsweise in verschlüsselter Form geschützt abgespeichert sein, insbesondere durch Verschlüsselung eines oder mehrerer verschiedener Betriebssystemkerne. Für verschiedene Benutzer können unterschiedliche Bootkonfigurationen vorgesehen werden. Der Betriebssystemkern und auf diesem Kern aufbauende Betriebssystemprogramme können auf dem Massenspeichermedium 40, auf dem Massenspeichermedium 65 oder auf beiden Massenspeichermedien 40, 65 abgelegt sein. Beispielsweise sind der oder die Betriebssystemkerne auf dem Massenspeichermedium 65 abgelegt, während die Betriebssystemprogramme auf dem Massenspeichermedium 40 abgelegt sind.

Dies ermöglicht die Bereitstellung einer angepassten Konfiguration für jeden am System zu authentifizierenden Benutzer. Insbesondere kann mit der beschriebenen Ausführungsform erreicht werden, dass ein jeweiliger Benutzer nur Zugriff auf die für ihn bestimmten Daten beziehungsweise Betriebssystemprogramme hat, während die übrigen Daten für ihn unzugänglich sind. Auch der Verlust der Recheneinheit 100 ist daher sicherheitstechnisch unkritisch, da ein nicht authentifizierter Benutzer und damit nicht berechtigter Benutzer keinen Zugriff auf die verschlüsselten Daten oder Betriebssystemprogramme hat.

Der Prozessor 10 ist eingerichtet, den Schnittstellenanschluss 101 für verschiedene Schnittstellentypen zu konfigurieren. Beispielsweise können Speicherbereiche des Massenspeichermediums 40 als Massenspeicher am Schnittstellenanschluss 101 freigegeben werden. Dies kann in der Form erfolgen, dass eine angeschlossene Arbeitsstation 200 die Recheneinheit 100 als externen Massenspeicher sieht, oder aber als Netzwerkschnittstelle, über die ein Zugriff auf ein virtuelles Netzwerklaufwerk möglich ist. Mit anderen Worten arbeitet die Recheneinheit 100 in diesem Fall aus der Sicht der angeschlossenen Arbeitsstation 200 als ein netzgebundener Speicher, englisch Network Attached Storage, NAS. Bei einer Konfiguration als Netzwerkschnittstelle können auf dem Prozessor 10 auch weitere Netzwerkdienstprogramme ausgeführt werden, die mit einer angeschlossenen Arbeitsstation 200 kommunizieren können.

Beispielsweise kann auch innerhalb des auf dem Prozessor 10 gestarteten Betriebssystems eine virtuelle Maschine ausgeführt werden, welche wiederum ein ausgeführtes oder ausführbares Betriebssystem enthält. Die entsprechende Schnittstelle des Prozessors 10 kann dabei so konfiguriert werden, dass eine Kommunikation einer angeschlossenen Arbeitsstation 200 mit dem Betriebssystem beziehungsweise darauf laufenden Diensten der virtuellen Maschine stattfindet.

In anderen Ausgestaltungsformen kann der Schnittstellenanschluss des Prozessors 10 auch als Mensch-Maschine-Schnittstelle konfiguriert werden, welche aus der Sicht einer angeschlossenen Arbeitsstation 200 wie eine Tastatur oder Computermaus oder ein anderes Eingabegerät wirkt. Damit ist es möglich, dass der Prozessor 10 beziehungsweise die Recheneinheit 100 die Eingaben eines menschlichen Benutzers simuliert oder aber Daten einer am Schnittstellenanschluss 103 angeschlossenen Tastatur oder ähnlichem in verarbeiteter oder unverarbeiteter Form am Schnittstellenanschluss 101 weitergibt.

Durch die Multiplexer 30, 50 ergeben sich verschiedene Konfigurationsmöglichkeiten bezüglich der externen Schnittstellenanschlüsse 101, 103. Beispielsweise ist in einer Konfiguration die Anschlusseinheit 53 oder 55 über den Multiplexer 50 unmittelbar an den Prozessor 10 angeschlossen. Zudem ist über den Multiplexer 30 der Prozessor 10 mit dem externen Schnittstellenanschluss 101 verbunden. In diesem Fall ist es möglich, dass der Controller 20 in einer Funktion als Host direkt mit einem am Schnittstellenanschluss 103 beziehungsweise am Anschlusselement 51 angeschlossenen externen Gerät kommuniziert. Durch die Datenverbindung zwischen dem Controller 20 und dem Prozessor 10 ist es jedoch möglich, die mit dem externen Gerät ausgetauschten Daten über den Controller 20 an den Prozessor 10 weiterzugeben. Der Prozessor 10 kann diese Daten dann weiterverarbeiten, beispielsweise für interne Zwecke oder aber zur Weitergabe an eine angeschlossene Arbeitsstation 200.

In einer anderen Konfiguration ist das Anschlusselement 51 über den Multiplexer 50 direkt mit dem Prozessor 10 verbunden. Der Multiplexer 30 ist so konfiguriert, dass entweder der Prozessor 10 oder der Controller 20 die Schnittstelle am Schnittstellenanschluss 101 kontrollieren. Unabhängig von der Konfiguration des Multiplexers 30 erfolgt eine Kommunikation zwischen dem Controller 20 und dem Anschlusselement 51 beziehungsweise einem daran angeschlossenen Gerät über den Prozessor 10, insbesondere über die Datenverbindung zwischen dem Prozessor 10 und dem Controller 20.

Vorzugsweise ist bei einer Konfiguration, bei der voraussichtlich geringe Datenmengen über den Schnittstellenanschluss 101 laufen, der Controller 20 direkt mit dem Schnittstellenanschluss 101 verbunden. Bei größeren Datenmengen ist der Prozessor 10 über den Multiplexer 30 mit dem Schnittstellenanschluss 101 verbunden. Dadurch kann mit erhöhter Flexibilität eine Anpassung der Konfiguration an die jeweiligen Betriebsbedingungen erfolgen.

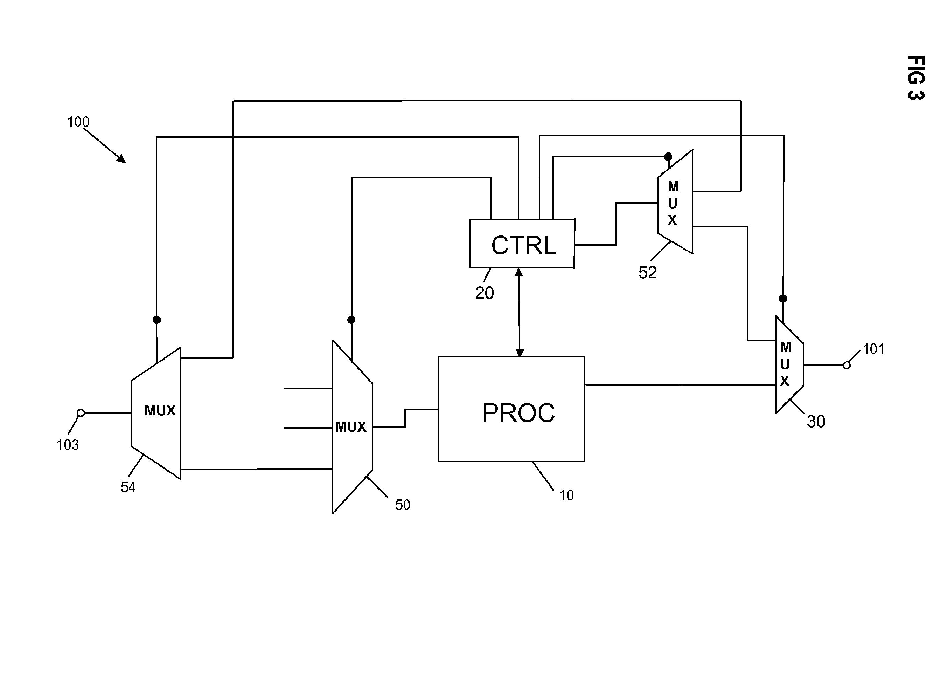

Um die Sicherheit des Systems der Recheneinheit 100 zu erhöhen, können zusätzliche Multiplexer vorgesehen werden, welche an die Multiplexer 30, 50 angeschlossen sind. Figur 3 zeigt eine beispielhafte Ausgestaltung einer Recheneinheit 100 mit solchen zusätzlichen Multiplexern 52, 54. Die in Figur 3 dargestellte Ausführungsform basiert auf den zuvor beschriebenen Ausführungsformen. Jedoch sind aus Übersichtsgründen verschiedene Elemente, die beispielsweise an den Prozessor 10 oder den Controller 20 angeschlossen sind, nicht dargestellt.

Bei der in Figur 3 dargestellten Ausführungsform ist der Controller 20 mit dem Multiplexer 30 über den Multiplexer 52 gekoppelt. Ferner ist der Controller 20 über den Multiplexer 52 mit einem Eingang des Multiplexers 54 gekoppelt. Ein anderer Eingang des Multiplexers 54 ist an einen Eingang des Multiplexers 50 angeschlossen. Beispielsweise entspricht dieser Eingang des Multiplexers 50 dem Eingang, an dem bei der Ausführungsform in Figur 2 das Anschlusselement 51 angeschlossen ist. Eine Ansteuerung der Multiplexer 30, 50, 52, 54 erfolgt über den Controller 20.

In einer Konfiguration erfolgt eine Kommunikation des Controllers 20 mit dem zweiten Schnittstellenanschluss 103 somit beispielsweise über den Multiplexer 52 und den Multiplexer 54. Dabei ist der Prozessor 10 folglich nicht mit dem Schnittstellenanschluss 103 direkt gekoppelt, sondern kann lediglich über die Datenverbindung zwischen dem Prozessor 10 und dem Controller 20 über den Controller 20 mit dem Schnittstellenanschluss 103 kommunizieren. Ferner ist dabei der Multiplexer 30 derart konfiguriert, dass der Prozessor 10 mit dem Schnittstelenanschluss 101 verbunden ist.

In einer anderen Konfiguration ist der Controller 20 über den Multiplexer 52 und dem Multiplexer 30 mit dem Schnittstellenanschluss 101 verbunden und stellt somit eine Verbindung zu einer angeschlossenen Arbeitsstation 200 mit der Recheneinheit 100 her. Der Prozessor 10 kann dabei über den Multiplexer 50 mit einem daran angeschlossenen Gerät kommunizieren. Insbesondere kann der Prozessor auch über den Multiplexer 50 und den Multiplexer 54 mit dem externen Schnittstellenanschluss 103 verbunden werden.

Bei der dargestellten Ausführungsform ist in verschiedenen Konfigurationen jeweils eine zuverlässige physikalische Trennung der entsprechenden Anschlüsse des Prozessors 10 beziehungsweise des Controllers 20 gewährleistet. Damit ist die Betriebssicherheit der Recheneinheit 100 erhöht.

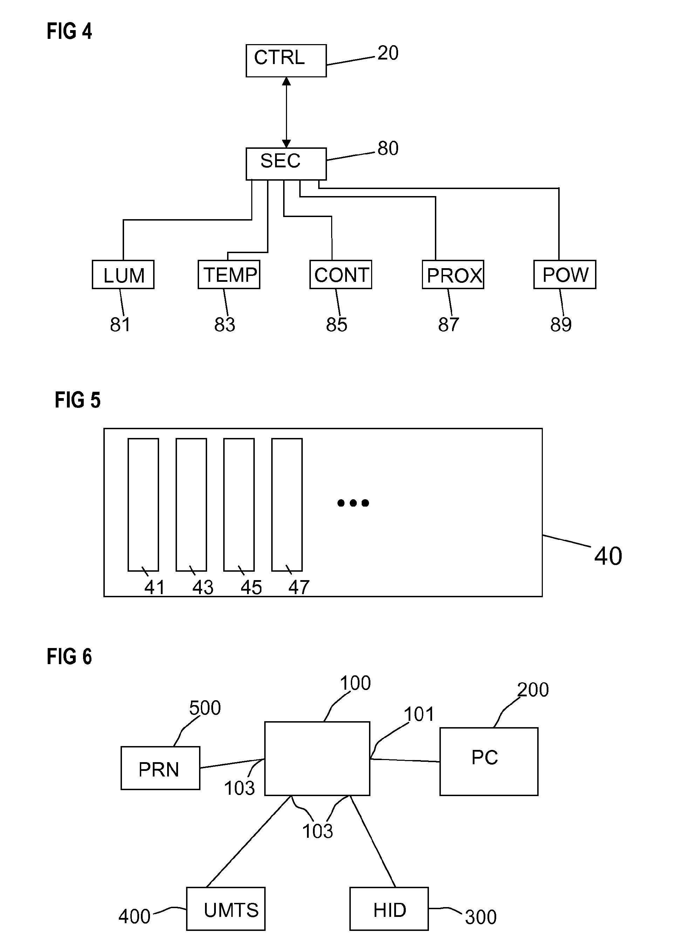

Figur 4 zeigt eine Ausgestaltungsform des Controllers 20 mit angeschlossenem Sicherheitsmodul 80 sowie verschiedenen Sensoren, die an das Sicherheitsmodul 80 angeschlossen sind. Beispielsweise ist ein Helligkeitssensor 81, ein Temperatursensor 83, ein Sensor 85, insbesondere ein Kontaktsensor, zur Überwachung eines Gehäuses der Recheneinheit 100, ein Näherungssensor 87 und ein Sensor 89 zur Überwachung einer Spannungsversorgung der Recheneinheit 100 an das Sicherheitsmodul 80 angeschlossen. Über die genannten Sensoren können verschiedene Betriebsparameter der Recheneinheit aufgenommen werden, um einen Betriebszustand festzustellen. Die Betriebsparameter beziehungsweise der Betriebszustand können für die Steuerung der Recheneinheit 100 durch den Controller 20 verwendet werden.

Durch den Helligkeitssensor 81 kann beispielsweise eine Helligkeit im Inneren eines Gehäuses der Recheneinheit 100 festgestellt werden, um dadurch beispielsweise einen Zugriff auf die Recheneinheit beziehungsweise ein Öffnen des Gehäuses zu detektieren. Dies ist beispielsweise auch mit dem Kontaktsensor 85 möglich, welcher beispielsweise beim Öffnen des Gehäuses ein entsprechendes Signal an das Sicherheitsmodul 80 liefert. Mit einer Temperaturüberwachung durch den Temperatursensor 83 kann festgestellt werden, ob die Recheneinheit 100 in einem vorgeschriebenen Temperaturbereich betrieben wird, um die Recheneinheit 100 gegebenenfalls ausschalten beziehungsweise ein Betriebssystem des Prozessors 10 herunterfahren zu können. Auch über den Näherungssensor 87 kann die Integrität der Recheneinheit 100 überwacht werden. Die Überwachung der Spannungsversorgung über den Sensor 89 kann wie zuvor beispielhaft bei Figur 2 beschrieben erfolgen. Die Betriebsparameter beziehungsweise der Betriebszustand können auch unabhängig von einem Betrieb des Prozessors 10 erfasst werden und zwischengespeichert werden, um bei einem nächsten Start des Prozessors 10, gesteuert durch den Controller 20, ausgewertet zu werden.

Die in Figur 4 dargestellten Sensoren können in weiteren Ausgestaltungsformen auch durch zusätzliche Sensoren ergänzt werden, oder es können einzelne Sensoren weggelassen werden.

Figur 5 zeigt eine Ausgestaltungsform eines Massenspeichermediums 40, der in mehrere Speicherbereiche 41, 43, 45, 47 eingeteilt ist. Die Zahl der dargestellten Speicherbereiche ist hierbei lediglich willkürlich gewählt und kann durchaus größer sein, beispielsweise abhängig von einer Zahl von Benutzern, die das System zulässt.

Beispielsweise sind in den Speicherbereichen 41, 43 Daten in verschlüsselter oder unverschlüsselter Form gespeichert, die im Betrieb der Recheneinheit 100 als Massenspeicher für eine angeschlossene Arbeitsstation 200 zur Verfügung gestellt werden. In dem Speicherbereich 45 ist beispielsweise ein Betriebssystem für den Prozessor abgelegt. Im Speicherbereich 47 können Applikationen oder Programme gespeichert sein, welche zur unmittelbaren Ausführung auf dem Prozessor 10 oder auf der Arbeitsstation 200 geeignet sind. Die verschiedenen Speicherbereiche können in Abhängigkeit einer Steuerung durch den Controller 20 dem Prozessor 10 einzeln zur Verfügung gestellt werden, insbesondere wenn die verschiedenen Speicherbereiche mit unterschiedlichen Schlüsseln verschlüsselt sind. In Abhängigkeit einer gewählten Konfiguration können dann wiederum einzelne der Speicherbereiche einer angeschlossenen Arbeitsstation 200 zur Verfügung gestellt werden. Beispielsweise ist in einem der Speicherbereiche auch ein Betriebssystem für eine anzuschließende Arbeitsstation gespeichert, sodass die Recheneinheit in einer Konfiguration als Massenspeichermedium für die Arbeitsstation konfiguriert wird. Diese Konfiguration wird aber beispielsweise erst nach erfolgreicher Authentifizierung möglich gemacht. Die angeschlossene Arbeitsstation 200 bootet dann wiederum von der als Massenspeicher konfigurierten Recheneinheit 100, sodass vorzugsweise kein Zugriff auf lokale Festplatten oder andere Festspeicher der Arbeitsstation notwendig ist oder ein Zugriff auf solche sogar verhindert wird. Dadurch können sowohl die Recheneinheit 100 als auch die Arbeitsstation 200 geschützt werden.

Neben einer Freigabe als Massenspeicher können die einzelnen Speicherbereiche auch über ein Netzwerkprotokolle, wie Common Internet File System, CIFS, beziehungsweise Server Message Block, SMB, freigegeben werden, wobei in diesem Fall der Schnittstellenanschluss 101 als Netzwerkschnittstelle konfiguriert ist. Eine Verschlüsselung der abzuspeichernden Daten kann hierbei transparent für die angeschlossene Arbeitsstation unmittelbar durch den Prozessor 10 auf dem jeweiligen Speicherbereich erfolgen. In anderen Ausgestaltungsformen, bei denen der Speicherbereich über die Netzwerkschnittstelle zur Verfügung gestellt wird, kann der Speicherbereich auch als Netzwerkblockgerät, englisch Network Block Device, NBD, der Arbeitsstation zur Verfügung gestellt werden. Die Arbeitsstation kann dann den freigegebenen Speicherbereich wie eine lokale Festplatte benutzen und beispielsweise ein eigenes Dateisystem darauf nutzen. Hierbei sind wiederum Varianten möglich, bei dem das Netzwerkblockgerät beziehungsweise der entsprechende Speicherbereich verschlüsselt oder unverschlüsselt auf dem Massenspeichermedium 40 abgelegt werden. Eine Verschlüsselung kann auch auf Seiten der Arbeitsstation 200 erfolgen.

In verschiedenen Ausgestaltungsformen kann der Schnittstellenanschluss 101 auch für mehrere verschiedene Betriebsarten gleichzeitig konfiguriert werden, sodass die Arbeitsstation 200 in der Recheneinheit eine Kombination mehrerer Geräte beziehungsweise Geräteklassen wie einen Massenspeicher und eine Netzwerkschnittstelle sieht. Beispielsweise wird dazu der Schnittstellenanschluss 101 am Prozessor 10 als Schnittstellenverteiler konfiguriert, an dem virtuell mehrere Geräte angeschlossen sind.

Die Funktionalität der Recheneinheit 100 kann auch durch weitere externe Geräte, die an die Recheneinheit 100 angeschlossen werden, erhöht werden. Figur 6 zeigt eine Ausgestaltungsform einer Recheneinheit 100, die an eine Arbeitsstation 200 angeschlossen ist. Ferner sind an die Recheneinheit 100 beziehungsweise an deren Schnittstellenanschluss 103 mehrere externe Geräte wie eine Tastatur und/oder Maus 300, eine UMTS-Karte 400 und ein Drucker 500 angeschlossen. Eine Verwaltung der angeschlossenen Geräte 300, 400, 500 erfolgt durch die Recheneinheit 100, sodass ein Nutzer der Recheneinheit 100 eine bekannte und sichere Umgebung aufbauen kann. Die von den Geräten 300, 400, 500 abgegebenen oder aufgenommenen Daten werden von der Recheneinheit 100 gesteuert bei Bedarf mit der Arbeitsstation 200 ausgetauscht. Beispielsweise wird somit von der Arbeitsstation 200 lediglich der dort vorhandene Prozessor und die übrige Hardware, wie zum Beispiel ein Bildschirm, genutzt, während die Sicherheit der dargestellten Anordnung durch die Recheneinheit 100 gewährleistet wird.

Mit einer Recheneinheit 100 in einer der beschriebenen Ausführungsformen ist es möglich, zeitlich nacheinander verschiedene Typen von Schnittstellen zu konfigurieren beziehungsweise emulieren. Bei der Verwendung von bekannten Gerätetypen für die Konfiguration beziehungsweise Emulation der Schnittstellen ist ein Zugriff auf die Recheneinheit 100 von einer angeschlossenen Arbeitsstation 200 mit üblicherweise vorhandenen Standardtreibern möglich. Die Möglichkeit der Umschaltung zwischen verschiedenen Schnittstellenkonfigurationen und in einigen Ausführungsformen der Kombination mehrerer Schnittstellenkonfigurationen ermöglicht einen flexiblen Einsatz der Recheneinheit, der sich durch entsprechende Konfiguration in einfacher Weise anpassen lässt. Durch die Überwachung des Systems durch den Controller 20 ist zudem eine hohe Datensicherheit und Betriebssicherheit der Recheneinheit 100 gewährleistet.

Ferner kann durch die Möglichkeit der Verschlüsselung von Daten auf Massenspeichermedien eine Recheneinheit mit hoher Sicherheit für persönliche Daten bereitgestellt werden. Weiterhin ermöglicht eine Konfiguration der Recheneinheit, bei der der Prozessor eine virtuelle Maschine ausführt, eine gesicherte Umgebung für sensible Prozesse oder Programme, die anstelle auf der Arbeitsstation 200 auf der Recheneinheit 100 beziehungsweise in der dort laufenden virtuellen Maschine ausgeführt werden können.

Bei den Ausführungsformen mit Authentifizierung kann zudem eine Konfiguration erreicht werden, bei der mehrere Nutzer unabhängig voneinander und geschützt voreinander die Recheneinheit 100 nutzen können.

Weiterhin ist es möglich, eine Andockstation oder Docking-Station vorzusehen, in die die Recheneinheit 100 eingesteckt werden kann. Dadurch wird es beispielsweise möglich, eine Datensicherung der Recheneinheit 100, insbesondere in verschlüsselter Form, auf einem gesicherten Medium durchzuführen. Dadurch wird die Datensicherheit für die Recheneinheit 100 auch bei deren Verlust erhöht.

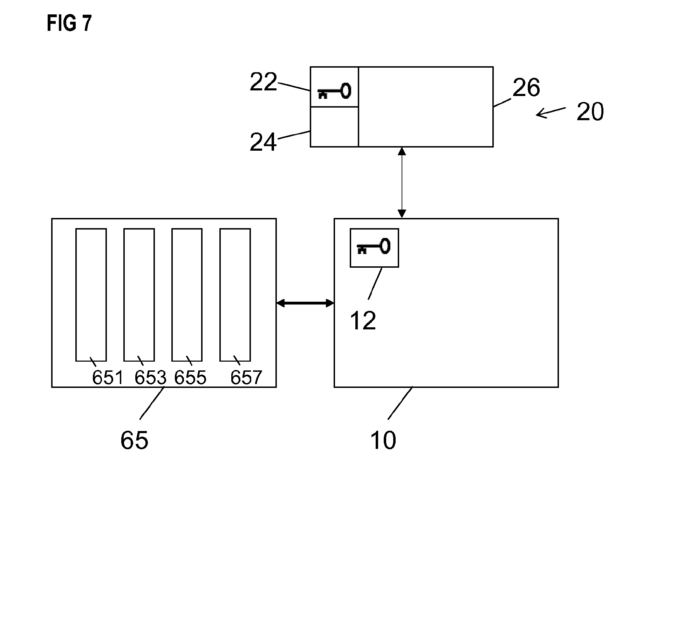

Figur 7 zeigt ein Blockschaltbild eines weiteren Details einer Ausführungsform einer mobilen Rechnereinheit 100. Dargestellt sind hierbei der Prozessor 10, der Controller 20 und ein Massenspeichermedium 65, beispielsweise eine SD-Karte. Der Prozessor 10 weist einen Schlüsselblock 12 auf, in dem ein interner, für den Prozessor 10 eindeutiger Schlüssel, im Folgenden Prozessorschlüssel, gespeichert ist. Der Controller 20 weist beispielsweise einen weiteren Schüsselbereich 22 und einen Hauptspeicherbereich 24 sowie einen Schaltungsbereich 26 auf. Beispielsweise ist in dem Schlüsselbereich 22 ein festes Bootprogramm gespeichert, welches vorzugsweise unauslöschlich und unveränderbar ist. Zusätzlich kann in dem Schlüsselbereich 22 auch ein Controllerschlüssel gespeichert sein, welcher vorzugsweise wiederum eindeutig diesem Controller 20 zugeordnet ist. Im Bereich 24 ist ein Hauptprogramm für den Controller gespeichert, welches die eigentliche Funktionalität des Controllers 20 beinhaltet und in dem Schaltungsbereich 26 ausgeführt wird. Das Hauptprogramm kann überschrieben werden, beispielsweise durch den Prozessor 10 über die Datenverbindung.

Das Massenspeichermedium 65 weist mehrere Speicherbereiche 651, 653, 655, 657 auf, welche beispielsweise durch Partitionen gebildet sind. Im Bereich 651 ist beispielsweise ein Bootloader für das Betriebssystem des Prozessors 10 in verschlüsselter Form gespeichert, insbesondere mit dem Prozessorschlüssel aus dem Bereich 12 verschlüsselt. Ferner können in den Bereich 651 öffentliche Schlüssel einer Signatur gespeichert werden, vorzugsweise ebenfalls verschlüsselt, um die in den anderen Bereichen 653, 655, 657 gespeicherten Daten auf ihre Authentizität zu überprüfen. Weiterhin kann in dem Bereich 651 auch eine Hauptsoftware für den Controller 20, welche in den Bereich 24 übertragen werden kann, gespeichert werden.

Im Speicherbereich 653 wird beispielsweise ein Kernel oder Betriebssystemkern für den Prozessor 10 gespeichert, während im Bereich 655 das eigentliche Betriebssystem mit den Betriebssystemprogrammen gespeichert ist. Als Betriebssystem kann beispielsweise ein Linux basiertes System eingesetzt werden. Im Speicherbereich 657 ist bei dieser Ausführungsform eine Signatur für den Betriebssystemkern und die Betriebssystemdateien gespeichert, sodass durch bekannte Verfahren die Authentizität der jeweiligen Dateien mit Hilfe des öffentlichen Signaturschlüssels geprüft werden kann.

Im Folgenden wird ein beispielhafter Initialisierungsvorgang der Recheneinheit 100 beschrieben, welcher insbesondere beim Einschalten der Recheneinheit ausgeführt wird. Dabei startet der Controller 20 mit dem im Bereich 22 gespeicherten Bootprogramm, sodass eine Grundinitialisierung des Controllers 20 erfolgt. Hierbei kann optional eine Sicherheitsüberprüfung auf Basis einer der zuvor beschriebenen Sicherheitsmechanismen beziehungsweise Sensoren ausgeführt werden. Beispielsweise lässt sich so bei einer erkannten Kompromittierung des Geräts, beispielsweise einer Öffnung des Gehäuses der Recheneinheit 100, eine Warnung an den Benutzer ausgeben und/oder der Initialisierungsvorgang vollständig abbrechen.

In einem nächsten Schritt steuert der Controller 20 den Prozessor 10 zum Booten an. Hierbei liest der Prozessor 10 beispielsweise den im Speicherbereich 651 gespeicherten Bootloader in verschlüsselter Form aus, um diesen nach Entschlüsselung mit dem Prozessorschlüssel zu starten. Alternativ kann der Bootloader dem Prozessor auch direkt vom Controller 20 zugeführt werden.

In einem nächsten Schritt beginnt der Prozessor 10 den Bootvorgang durch Ausführen des Bootloaders, jedoch noch vor Laden oder Ausführen des Betriebssystemkerns. Optional kann nach der Generation eines dynamischen Schlüsselpaars durch Prozessor 10 und Controller 20, etwa auf Basis des Prozessorschlüssels und des Controllerschlüssels, eine gesicherte Fassung der Hauptsoftware an den Controller 20 beziehungsweise in den Hauptbereich 24 übertragen werden, welche wie zuvor beschrieben in dem Speicherbereich 651 abgelegt sein kann. Dadurch kann eine höhere Sicherheit über die Integrität der Hauptsoftware für den Controller 20 erreicht werden. Jedoch kann auf diesen Schritt auch verzichtet werden, sodass der Controller 20 das zuletzt im Hauptbereich 24 gespeicherte Hauptprogramm ausführt. Der Prozessor 10 signalisiert nun dem Controller 20, dass dieser das Hauptprogramm mit sämtlichen Funktionen ausführen kann.

Im nächsten Schritt führt der Prozessor 10 vorzugsweise einen Test des Betriebssystemkerns und der Betriebssystemdateien auf Basis einer Signaturprüfung aus. Bei erfolgreicher Prüfung beginnt der Prozessor den Betriebssystemkern zu booten und die notwendigen Betriebssystemdateien zu laden. Nach dem Bootvorgang werden die zuvor erzeugten Schlüsseldateien zur verschlüsselten Kommunikation über die Datenverbindung mit dem Controller 20 aus einem internen Prozessorspeicher, beispielsweise einem SRAM, in den Betriebssystemkern kopiert, wo sie für die weitere sichere Kommunikation mit dem Controller 20 zu Verfügung stehen. Ein Zugriff auf diese Schlüssel kann nur durch den Betriebssystemkern erfolgen, nicht aber extern, insbesondere nicht von außerhalb der Recheneinheit 100. Die Schlüssel werden insbesondere auch nicht auf einem Massenspeichermedium angelegt.

Durch den beschriebenen Initialisierungsvorgang wird eine erhöhte Sicherheit insbesondere bezüglich der Integrität der auszuführenden Programme in der Recheneinheit gewährleistet. Parallel zu dem Bootvorgang des Prozessors 10 kann der Controller 20, wie oben ausführlich erläutert, die Erstkonfiguration des Schnittstellenanschlusses beziehungsweise des Multiplexers vornehmen. Dies geschieht unmittelbar nach dem Beginn der Ausführung des Hauptprogramms. Wenn der Prozessor 10 dem Controller 20 den Abschluss des Bootvorgangs signalisiert, kann der konfigurierte Schnittstellenanschluss sozusagen an den Prozessor 10 übergeben werden, bei entsprechender Umschaltung des Multiplexers 30, wobei dieser Umschaltvorgang für eine angeschlossene Arbeitsstation 200 unbemerkt bleibt. Somit steht die Recheneinheit 100 für die Arbeitsstation 200 schneller zur Verfügung.

Die Speicherbereiche 651, 653, 655, 657 können in abgewandelten Ausführungsformen auch auf dem Massenspeichermedium 40 vorgesehen werden. Zu beachten sind hierbei die entsprechenden Maßnahmen zur Gewährleistung der Integrität von Bootloader, Betriebssystemkern und Betriebssystemdateien.

### Bezugszeichenliste

- 10: Prozessor
- 20: Controller
- 30, 50: Multiplexer
- 40, 65: Massenspeichermedium
- 41,43,45,47: Speicherbereich
- 651,653,655,657: Speicherbereich
- 51,53,55: Anschlusselement
- 52, 54: Multiplexer
- 60: Speicher
- 70: Authentifizierungsmodul
- 80: Sicherheitsmodul
- 81,83,85,87,89: Sensor
- 91: Batterie
- 93: Speicher
- 95: Uhrzeitmodul
- 100: Recheneinheit
- 101, 103: Schnittstellenanschluss
- 200: Arbeitsstation
- 300: Tastatur
- 400: UMTS-Karte
- 500: Drucker

## Patentansprüche

1. Mobile Recheneinheit (100), umfassend
- einen externen Schnittstellenanschluss (101) zum Anschließen einer Arbeitsstation (200) an die Recheneinheit (100);
- einen Multiplexer (30), der mit dem Schnittstellenanschluss (101) verbunden ist;
- einen Prozessor (10), der über den Multiplexer (30) mit dem Schnittstellenanschluss (101) gekoppelt ist und der eingerichtet ist, ein Betriebssystem auszuführen; und
- einen Controller (20), der über eine Datenverbindung mit dem Prozessor (10) verbunden ist, über den Multiplexer (30) mit dem Schnittstellenanschluss (101) gekoppelt ist und eingerichtet ist, den Multiplexer (30) derart anzusteuern, dass entweder der Prozessor (10) oder der Controller (20) mit dem Schnittstellenanschluss (101) verbunden ist, um jeweils mit einer angeschlossenen Arbeitsstation (200) zu kommunizieren;
- wobei der Prozessor (10) und der Controller (20) jeweils eingerichtet sind, den Schnittstellenanschluss (101) zu konfigurieren; und
- wobei ein Umschalten der Verbindung des Multiplexers (30) zwischen dem Prozessor (10) und dem Controller (20) transparent für eine angeschlossene Arbeitsstation (200) erfolgt.

2. Recheneinheit (100) nach Anspruch 1,
bei der der Prozessor (10) und der Controller (20) eingerichtet sind, den Schnittstellenanschluss (101) als wenigstens eines der Folgenden zu konfigurieren:
- eine Netzwerkschnittstelle;
- eine Schnittstelle zum Bereitstellen eines Massenspeichers;
- eine Mensch-Maschine-Schnittstelle;
- ein Schnittstellenverteiler.

3. Recheneinheit (100) nach Anspruch 1 oder 2,
bei der der Controller (20) eingerichtet ist, einen Bootvorgang zu steuern, der auf dem Prozessor (10) abläuft.

4. Recheneinheit (100) nach Anspruch 3,
ferner umfassend ein Authentifizierungsmodul (70), welches zur Authentifizierung eines Benutzers der Recheneinheit (100) und zur Abgabe eines von der Authentifizierung abhängigen Authentifizierungssignals eingerichtet ist, wobei der Controller (20) eingerichtet ist, den Bootvorgang auf der Basis des Authentifizierungssignals zu steuern.

5. Recheneinheit (100) nach Anspruch 4,
bei der der Controller (20) eingerichtet ist, auf der Basis des Authentifizierungssignals eine von wenigstens zwei gespeicherten Bootkonfigurationen auszuwählen, sodass der Prozessor (10) mit der ausgewählten Bootkonfiguration bootet.

6. Recheneinheit (100) nach einem der Ansprüche 3 bis 5,
bei der der Controller (20) eingerichtet ist, den Bootvorgang auf der Basis einer aktuellen Zeitinformation und wenigstens einem gespeicherten Zeitbereich zu steuern.

7. Recheneinheit (100) nach einem der Ansprüche 3 bis 6,
bei der der Controller (20) eingerichtet ist, den Prozessor (10) in Abhängigkeit eines erfolgreichen Bootvorgangs des Prozessors (10) über den Multiplexer (30) mit dem Schnittstellenanschluss (101) zu verbinden.

8. Recheneinheit (100) nach einem der Ansprüche 1 bis 7,
ferner umfassend wenigstens einen Sensor (81, 83, 85, 87, 89), welcher zur Erfassung wenigstens eines Betriebsparameters der Recheneinheit (100) eingerichtet ist, wobei der Controller (20) eingerichtet ist einen Betriebszustand der Recheneinheit (100) auf der Basis des wenigstens einen Betriebsparameters zu überwachen.

9. Recheneinheit (100) nach Anspruch 8,
bei der der wenigstens eine Sensor (81, 83, 85, 87, 89) aus der Gruppe der Folgenden gebildet ist:
- ein Helligkeitssensor (81);
- ein Temperatursensor (83);
- ein Näherungssensor (87);
- ein Sensor (85) zur Überwachung eines Gehäuses der Recheneinheit (100);
- ein Sensor (89) zur Überwachung einer Spannungsversorgung der Recheneinheit (100).

10. Recheneinheit (100) nach einem der Ansprüche 1 bis 9,
ferner umfassend wenigstens ein Massenspeichermedium (40, 65), insbesondere ein nichtflüchtiges Massenspeichermedium, wobei in wenigstens einem Speicherbereich des Massenspeichermediums (40 ,65) eine Betriebssoftware für den Prozessor (10) gespeichert ist oder speicherbar ist.

11. Recheneinheit (100) nach Anspruch 10,
bei der der Prozessor (10) eingerichtet ist, wenigstens einen weiteren Speicherbereich des Massenspeichermediums (40 ,65) als Massenspeicher über den Schnittstellenanschluss (101) zur Verfügung zu stellen.

12. Recheneinheit (100) nach einem der Ansprüche 1 bis 11,
bei der der Prozessor (10) und der Controller (20) eingerichtet sind, für eine verschlüsselte Kommunikation über die Datenverbindung ein Schlüsselpaar, insbesondere ein symmetrisches Schlüsselpaar, dynamisch zu erzeugen.

13. Recheneinheit (100) nach einem der Ansprüche 1 bis 12,
bei der der Prozessor (10) eingerichtet ist, eine virtuelle Maschine auszuführen, die von einer angeschlossenen Arbeitsstation (200) kontaktierbar ist.

14. Recheneinheit (100) nach einem der Ansprüche 1 bis 13,
ferner aufweisend einen weiteren Schnittstellenanschluss (103), der zum Anschließen eines Peripheriegeräts (300, 400, 500) an die Recheneinheit (100) eingerichtet ist, sowie einen weiteren Multiplexer (54), der mit dem weiteren Schnittstellenanschluss (103) verbunden und mit dem Controller (20) und dem Prozessor (10) gekoppelt ist, wobei der Controller (20) eingerichtet ist, den weiteren Multiplexer (54) derart anzusteuern, dass entweder der Prozessor (10) oder der Controller (20) mit dem weiteren Schnittstellenanschluss (103) verbunden ist, um jeweils mit einem angeschlossenen Peripheriegerät (300, 400, 500) zu kommunizieren.

15. Recheneinheit (100) nach einem der Ansprüche 1 bis 14,
bei der der Schnittstellenanschluss (101, 103) eine Universal Serial Bus, USB, Schnittstelle umfasst.
